# EUROPÄISCHE PATENTSCHRIFT

(11) **EP 1 888 664 B1**
(45) Veröffentlichungstag und Bekanntmachung des Hinweises auf die Patenterteilung: **24.02.2010**
(21) Anmeldenummer: 06763166.3
(22) Anmeldetag: 17.05.2006
(51) Int. Cl.: C08G 18/18, C08G 18/10

(54) **VERFAHREN ZUR HERSTELLUNG VON VISKOELASTISCHEN POLYURETHAN-WEICHSCHAUMSTOFFEN**
METHOD FOR PRODUCING VISCOELASTIC POLYURETHANE-SOFT FOAM MATERIALS
PROCEDE POUR PREPARER DES MOUSSES SOUPLES DE POLYURETHANE VISCOELASTIQUES

(30) Priorität: 23.05.2005 DE 102005024144
(43) Veröffentlichungstag der Anmeldung: 20.02.2008
(73) Patentinhaber: BASF SE, 67056 Ludwigshafen (DE)
(72) Erfinder: SCHUSTER, Marita, 32351 Stemwede-Haldem (DE); EISENHARDT, Andrea, 49377 Vechta (DE); ARLT, Anja, 32361 Preussisch-Oldendorf / Hed (DE); VARENKAMP, Volker, 49448 Stemshorn (DE); DROGLA, Verena, 49448 Lemförde (DE)
(86) Internationale Anmeldenummer: PCT/EP2006/062383
(87) Internationale Veröffentlichungsnummer: WO 2006/125740

(56) Entgegenhaltungen:
- EP-A- 0 877 042
- EP-A- 0 879 837
- EP-A- 1 097 953
- EP-A- 1 528 072
- US-B1- 6 653 363

## Beschreibung

Gegenstand der Erfindung ist ein Verfahren zur Herstellung von viskoelastischen Polyurethan-Weichschaumstoffen mit einer verringerten Emission von organischen Stoffen.

Polyurethan-Weichschaumstoffe werden in vielen technischen Gebieten, insbesondere zur Polsterung oder Geräuschdämmung, eingesetzt. Ihre Herstellung erfolgt üblicherweise durch Umsetzung von Polyisocyanaten mit Verbindungen mit mindestens zwei mit Isocyanatgruppen reaktiven Wasserstoffatomen in Gegenwart von Treibmitteln sowie gegebenenfalls Katalysatoren und üblichen Hilfs- und/oder Zusatzstoffen. Viskoelastische Polyurethan-Weichschaumstoffe werden insbesondere in der Möbelindustrie, insbesondere zur Herstellung von Matratzen, sowie in der Kraftfahrzeugindustrie, insbesondere zum Hinterschäumen von Teppichen und zur Schallabsorption eingesetzt.

Die meisten Polyurethan-Schaumstoffe emittieren flüchtige organische Verbindungen. Dabei kann es sich beispielsweise um Katalysatoren, Abbauprodukte oder nicht umgesetzte flüchtige Einsatzstoffe handeln. Diese Emissionen werden für viele Einsatzgebiete der Polyurethan-Weichschaumstoffe, beispielsweise beim Einsatz in Kraftfahrzeuginnenräumen oder bei der Anwendung in Möbeln oder Matratzen, als Qualitätsmangel empfunden.

Der Markt verlangt daher zunehmend nach emissionsarmen Schaumstoffen. Insbesondere die Automobilindustrie fordert eine deutliche Reduktion von flüchtigen organischen (VOC) und kondensierbaren Verbindungen (Fogging oder FOG) in Schaumstoffen.

Es hat in der Vergangenheit nicht an Versuchen gefehlt, die Emissionsneigung der Polyurethan-Weichschaumstoffe zu vermindern.

Da als eine wesentliche Quelle der Emissionen flüchtige Aminkatalysatoren ausgemacht wurden, erfolgte die Verwendung von einbaubaren Katalysatoren, dass heißt solchen, die neben der tertiären Aminogruppe weitere, mit Isocyanatgruppen reaktive Gruppen aufweisen, über die sie in das Polymergerüst eingebaut werden. Derartige Katalysatoren sind beispielsweise in EP-A-451 826 und EP-A-677 540 beschrieben. Nachteilig bei der Verwendung von einbaubaren Katalysatoren ist insbesondere, dass die in das Polymergerüst eingebauten Katalysatoren die Rückspaltung der Urethangruppen katalysieren. Dadurch verschlechtern sich zum einen die mechanischen Eigenschaften der Polyurethane mit der Zeit, zum anderen können bei der Rückspaltung flüchtige Verbindungen entstehen, die ihrerseits wieder aus dem Schaum emittieren können.

In RD 431026 werden Polyurethan-Weichschaumstoffe mit einer verringerten Emission beschrieben, die unter Verwendung von MDI als Isocyanat hergestellt wurden. Als Katalysatoren wurden einbaubare Aminkatalysatoren eingesetzt.

Ein Nachteil vieler einbaubarer Katalysatoren ist der frühzeitige Einbau in die Polymerkette. Dadurch sind die Katalysatoren in der Reaktionsmischung nicht mehr frei beweglich, was zu Inhomogenitäten im Polymergerüst führen kann.

Da diese reaktiven Katalysatoren auch die Rückreaktion katalysieren, weisen Schäume auf der Basis von einbaubaren Katalysatoren in der Regel sehr viel schlechtere Alterungseigenschaften auf, als Schäume, die mit herkömmlichen leicht-flüchtigen AminKatalysatoren hergestellt wurden. Eine wesentliche Anforderung an Schaumstoffe ist hierbei die Beständigkeit nach der Feucht-Wärme-Lagerung. Dabei werden die Schaumproben einer Feucht-Wärme-Lagerung unterzogen und anschließend eine Druckverformungsmessung an den Proben durchgeführt. Schäume auf der Basis einbaubarer Aminkatalysatoren erreichen nach einer Feucht-Wärme-Lagerung zumeist die geforderten Emissionswerte; die Rückreaktion durch die eingebauten Katalysatoren führt jedoch zu Störungen in der Polymermatrix. Diese führen meist dazu, dass emissionsreduzierte Schäume die spezifizierten Werte für die Alterungseigenschaften überschreiten. Dieses Problem wird mit abnehmender Elastizität des Schaums größer, da man im Fall von untervernetzten, viskoelastischen Schäumen die mangelnde Alterungsbeständigkeit nicht durch einen hohen Vernetzungsgrad auffangen kann.

Bei den bekannten Schaumstoffen wird somit eine Verringerung der Emission durch den Einsatz von einbaubaren Katalysatoren mit einer Verschlechterung der Alterungseigenschaften der Schaumstoffe erkauft. Dies ist jedoch für viele Anwendungen nicht akzeptabel.

Aufgabe der vorliegenden Erfindung war es, viskoelastische, Polyurethan-Weichschaumstoffe bereitzustellen, die sich durch eine geringe Emission und gute mechanische Eigenschaften, insbesondere gute Alterungseigenschaften, auszeichnen.

Unter viskoelastischen Polyurethan-Weichschaumstoffen werden in der vorliegenden Erfindung solche Schaumstoffe verstanden, die eine Rückprallelastizität von < 40 % und eine Dämpfung (Verlustfaktor) von mindestens 0,3 aufweisen.

Die Aufgabe der Erfindung konnte gelöst werden durch den Einsatz von Diphenylmethandiisocyanat (MDI) und/oder Prepolymeren auf Basis von MDI als Polyisocyanat und den Einsatz einer speziellen Katalysatorkombination.

Gegenstand der Erfindung ist demzufolge ein Verfahren zur Herstellung von viskoelastischen Polyurethan-Schaumstoffen durch Umsetzung von
a) mindestens einem Polyisocyanat mit
b) mindestens einer Verbindung mit mindestens zwei mit Isocyanatgruppen reaktiven Wasserstoffatomen in Anwesenheit von
c) Katalysatoren und
d) Treibmitteln, dadurch gekennzeichnet, dass
als a) Polyisocyanate ai) Diphenylmethandiisocyanat oder aii) Mischungen aus Diphenylmethandiisocyanat und Polymethylenpolyphenylenpolyisocyanaten, und/oder aiii) Isocyanatgruppen enthaltende Prepolymere, herstellbar durch Umsetzung von aiv) Polyetheralkoholen mit Diphenylmethandiisocyanat oder Mischungen aus Diphenylmethandiisocyanat und Polymethylenpolyphenylenpolyisocyanaten und als Katalysatoren c) eine Mischung aus mindestens je einem Katalysator ci) und cii), wobei ci) ausgewählt aus der Gruppe, enthaltend Verbindungen der allgemeinen Formeln (I) bis (VII), mit 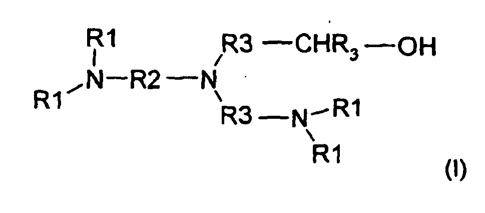 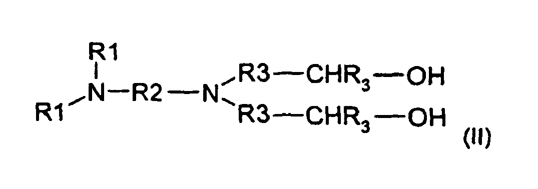 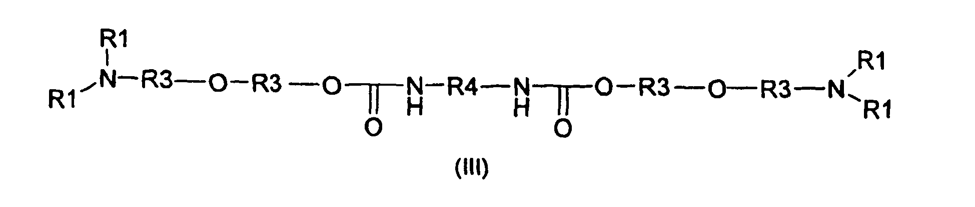 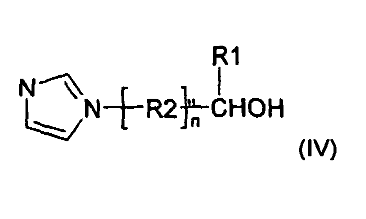 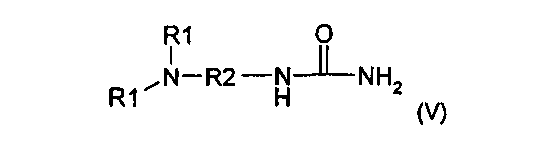 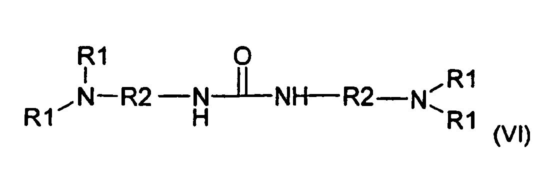 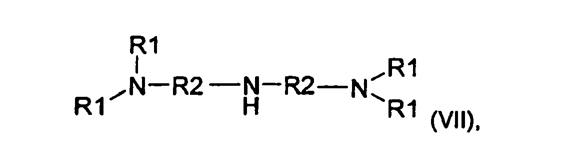 und cii) ausgewählt ist aus der Gruppe, enthaltend Verbindungen der allgemeinen Formeln (VIII) bis (XII), mit 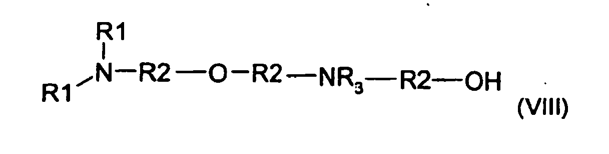 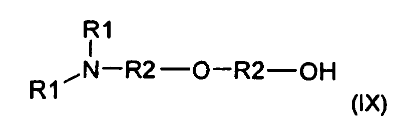 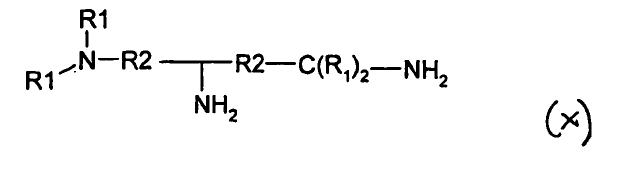 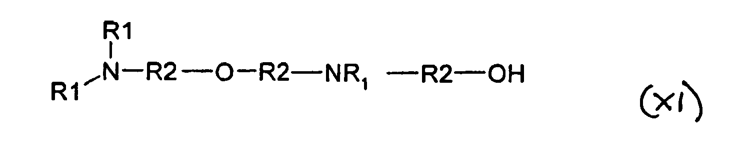 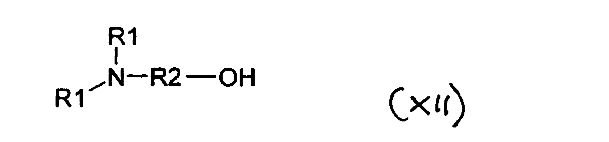 wobei R1, einen linearen, verzweigten oder cyclischen, gegebenenfalls mit einem Heteroatom substituierten Alkylrest mit 1 bis 5 Kohlenstoffatomen,
R2 einen aliphatischen, cycloaliphatischen oder aromatischen Rest mit 1 bis 10 Kohlenstoffatomen , und
R3, einen linearen, verzweigten oder cyclischen, gegebenenfalls mit einem Heteroatom substituierten Rest mit 1 bis 5 Kohlenstoffatomen bedeutet,
eingesetzt werden.
Bei den Heteroatomen handelt es sich vorzugsweise um Halogenatome, insbesondere um Chlor.

Als Polyisocyanate a) werden, wie beschrieben, ai) Diphenylmethandiisocyanat (MD) oder aii) Mischungen aus Diphenylmethandiisocyanat und Polymethylenpolyphenylenpolyisocyanaten (Roh-MDI), und/oder aiii) Isocyanatgruppen enthaltene Prepolymere, herstellbar durch Umsetzung von aiv) Polyetheralkoholen mit Diphenylmethandiisocyanat oder Mischungen aus Diphenylmethandiisocyanat und Polymethylenpolyphenylenpolyisocyanaten eingesetzt.

Als MDI ai) können alle Isomeren des 2-Kern-MDI eingesetzt werden. Vorzugsweise ist der Anteil an 4,4'-MDI im MDI mindestens 80 Gew.-%, besonders bevorzugt mindestens 90 Gew.-%. Der Rest ist im wesentlichen 2,4'-MDI.

Die Mischungen aus Diphenylmethandiisocyanat und Polymethylenpolyphenylenpolyisocyanaten (Roh-MDI) aii) haben zumeist einen NCO-Gehalt in Bereich zwischen 29 und 33 Gew.-%. Der Gehalt an 2-Kern-MDI liegt vorzugsweise im Bereich zwischen 37 und 41 Gew.-% und der Gehalt an 3-Kern-MDI liegt vorzugsweise im Bereich zwischen 23 und 28 Gew.-%. Der Rest sind höherkernige Homologe. Derartige Produkte sind handelsüblich und werden beispielsweise von der BASF AG als Lupranat® M20 vertrieben.

Die Prepolymere aiii) haben vorzugsweise einen NCO-Gehalt von 23 und 31 Gew.-%, insbesondere von 25 bis 30 Gew.-%. Ihre Herstellung erfolgt durch Umsetzung von aiv) Polyetheralkoholen mit Diphenylmethandiisocyanat oder Mischungen aus Diphenylmethandiisocyanat und Polymethylenpolyphenylenpolyisocyanaten. Die Isocyanate entsprechen in ihrer Zusammensetzung den als ai) und aii) beschriebenen Produkten.

Vorzugsweise weisen die Prepolymere aiii) einen Gehalt an 2-Kern-MDI im Bereich zwischen 40 und 85 Gew.-% und einen Gehalt an 3-Kern-MDI zwischen 5 und 30 Gew.-%, jeweils bezogen auf das Gewicht des Prepolymeren, auf.

Der Anteil von 4,4'-MDI im Prepolymer ist vorzugsweise größer 35 Gew.-%, besonders bevorzugt zwischen 30 und 70 Gew.-%, jeweils bezogen auf das Prepolymer. Der Anteil an 2,4-MDI ist insbesondere kleiner 20 Gew.-%, vorzugsweise zwischen 10 und 20 Gew.-%.

Als Polyetheralkohole aiv) werden vorzugsweise 2- bis 3-funktionelle Polyetheralkohole mit einer Hydroxylzahl im Bereich zwischen 25 und 60 mgKOH/g, wie sie üblicherweise zur Herstellung von Polyurethan-Weichschaumstoffen eingesetzt werden.

Als Verbindungen mit mindestens zwei mit Isocyanatgruppen reaktiven Wasserstoffatomen b) werden für das erfindungsgemäße Verfahren insbesondere Polyesteralkohole und/oder Polyetheralkohole bi) eingesetzt.

Die eingesetzten Polyetheralkohole bi) haben zumeist eine Funktionalität von 2 bis 4, vorzugsweise 2 bis 3, und ein Molekulargewicht von 450 bis 8000 g/mol, vorzugsweise 3600 bis 6500 g/mol. Ihre Herstellung erfolgt zumeist katalytische Anlagerung niederer Alkylenoxide, zumeist Ethylenoxid und/oder Propylenoxid, an hydroxylfunktionelle Startsubstanzen. Als Startsubstanzen werden zumeist Wasser und/oder 2- oder 3-funktionelle Alkohole, wie Ethylenglykol, Propylenglykol, Glyzerin oder Trimethylolpropan (TMP) eingesetzt. Als Alkylenoxide kommen, wie erwähnt, zumeist Ethylenoxid und/oder Propylenoxid zum Einsatz. Diese können einzeln, nacheinander oder im Gemisch miteinander angelagert werden. Bei Weichschaumpolyetheralkoholen wird zur Erhöhung des Anteils an primären Hydroxylgruppen häufig an den Kettenenden ein Ethylenoxidblock angelagert.

In einer bevorzugten Ausführungsform der Erfindung enthält die Komponente bi) mindestens einen Polyetheralkohol, der durch Anlagerung von Alkylenoxiden, insbesondere Ethylenoxid und/oder Propylenoxid, an 2- bis 3-funktionelle Alkohole hergestellt wird und dessen Hydroxylzahl im Bereich zwischen 20 und 450 mgKOH/g, insbesondere 20 und 100 mgKOH/g, liegt.

Die Herstellung der Polyetheralkohole bi) erfolgt üblicherweise durch katalytische Anlagerung von Alkylenoxiden, insbesondere Ethylenoxid und/oder Propylenoxid, an H-funktionelle Startsubstanzen. Als Katalysatoren werden vorzugsweise basische Verbindungen, insbesondere Hydroxide von Alkalimetallen, eingesetzt. In jüngerer Zeit werden häufig auch Multimetallcyanidverbindungen, auch als DMC-Katalysatoren bezeichnet, eingesetzt.

Als Polyetheralkohole bi) können auch polymermodifizierte Polyetheralkohole eingesetzt werden. Diese werden zumeist durch in-situ-Polymerisation von olefinisch ungesättigten Monomeren, insbesondere Acrylnitril und/oder Styrol in den Polyetheralkoholen hergestellt. Zu den polymermodifizierten Polyetheralkoholen gehören auch Polyharnstoffdispersionen enthaltende Polyetheralkohole.

Die polymermodifizierten Polyetheralkohole bi) haben vorzugsweise eine Hydroxylzahl im Bereich 10 bis 100 mgKOH/g, bevorzugt 15 bis 60 mgKOH/g, und vorzugsweise einen Feststoffanteil von 2 - 60 Gew.-%, bevorzugt von 5 - 50 Gew.-%.

Die eingesetzten Polyesteralkohole bi) werden zumeist durch Kondensation von mindestens zweifunktionellen Carbonsäuren mit mindestens zweifunktionellen Alkoholen hergestellt. Für das erfindungsgemäße Verfahren kommen insbesondere solche mit einer Funktionalität von durchschnittlich 2,0 bis 3,5, vorzugsweise 2,0 bis 2,8, und einem Molekulargewicht von durchschnittlich 800 bis 4000 g/mol, insbesondere 1500 bis 2800 g/mol, zum Einsatz.

Zu den Verbindung mit mindestens 2 mit Isocyanat reaktiven Gruppen gehören auch Kettenverlängerer und Vernetzer. Dabei handelt es sich vorzugsweise um H-funktionelle Verbindungen mit Molekulargewichten von 62 bis 400 g/mol, insbesondere 2- bis 3-funktionelle Alkohole, Amine oder Aminoalkohole. Ihre Menge beträgt insbesondere 0 bis 25, vorzugsweise 2 bis 12 Gewichtsteile, bezogen auf 100 Gewichtsteile Polyetheralkohol und/oder Polyesteralkohole.

In einer bevorzugten Ausführungsform des erfindungsgemäßen Verfahrens enthält die Komponente b) mindestens bii) ein Anlagerungsprodukt von Alkylenoxid an eine Verbindung mit mindestens einer Aminogruppe im Molekül, insbesondere Dimethylaminopropylamin.Diese Anlagerungsprodukte von Alkylenoxid an an eine Verbindung mit mindestens einer Aminogruppe im Molekül, insbesondere Dimethylaminopropylamin, bii) weisen vorzugsweise eine Molmasse im Bereich von 160 bis 500 g/mol auf. Sie werden insbesondere in einer Menge von 0,01 bis 10 Gew.-%, bezogen auf das Gewicht der Komponente b), eingesetzt.

In einer bevorzugten Ausführungsform des erfindungemäßen Verfahrens enthalten die Verbindungen mit mindestens zwei mit Isocyanatgruppen reaktiven Wasserstoffatomen, insbesondere die Polyetheralkohole, aminfreie Antioxidantien, das heißt solche, die keine Aminogruppen enthalten. Der Zusatz der Antioxidantien ist üblich und erforderlich, um den thermooxidativen Abbau der Polyole zu unterdrücken. Viele Antioxidantien können ebenfalls aus dem Kunststoff migrieren und somit die Emission ansteigt.

Die in den Verbindungen mit mindestens zwei mit Isocyanatgruppen reaktiven Wasserstoffatomen enthaltenen aminfreien Stabilisatoren gegen thermooxidativen Abbau sind vorzugsweise ausgewählt aus der Gruppe, enthaltend
i) sterisch gehinderte Phenole,
ii) Lactone, insbesondere Benzofuran-2-on-derivate
iii) weitere aminfreie Antioxidantien, die kein Phenol abspalten, wie beispielsweise sterisch gehinderte Phosphite,
sowie beliebige Gemische dieser Verbindungen untereinander.

Beispiele für sterisch gehinderte Phenole i) sind Octadecyl-3-(3,5-di-t-butyl-4-hydroxyphenylpropionat), 3,5-Bis-(1,1-dimethylethyl-4-hydroxy-C7-C9-alkylverzweigte Ester, Ethylen(bisoxyethylen)bis-(3-(5-t-butylhydroxy-4-tolyl)-propionat),

Beispiele für Lactone ii), insbesondere Benzofuran-2-on-derivate sind beschrieben in EP 1291384 und DE 19618786.

Beispiele für die aminfreien Antioxidantien, die kein Phenol abspalten iii) sind beispielsweise beschrieben im Patent EP 905180, wie zum Beispiel Tris(2,4-di-t-butylphenyl)phosphit.

In einer bevorzugten Ausführungsform der Erfindung bestehen die Antioxidantien aus 20-90 Gew.-%, bevorzugt aus 50 bis 90 Gew.-% sterisch gehinderten Phenolderivaten und 10-80 Gew.-%, bevorzugt aus 10 bis 40 Gew.-% Benzofuran-2-one-derivaten und 0 bis 30 Gew.-%, bevorzugt aus 0 bis 20 Gew.-% aus anderen aminfreien Antioxidantverbindungen, die kein Phenol abspalten.

Diese Verbindungen werden den Verbindungen mit mindestens zwei mit Isocyanatgruppen reaktiven Wasserstoffatomen b) zumeist unmittelbar nach der Herstellung zugesetzt. Bei Bedarf können unmittelbar vor der Umsetzung mit den Isocyanaten weitere Antioxidantien zugesetzt werden. Die Menge der Antioxidantien in den Verbindungen mit mindestens zwei mit Isocyanatgruppen reaktiven Wasserstoffatomen liegt üblicherweise im Bereich 100 bis 8000 ppm, bevorzugt 500 bis 5000 ppm.

In einer bevorzugten Ausführungsform des erfindungsgemäßen Verfahrens weisen die Polyetheralkohole aiv) und die Polyetheralkohole bi) am Kettenende einen Block aus dem gleichen Alkylenoxid, insbesondere Ethylenoxid, auf.

In einer weiteren bevorzugten Ausführungsform des erfindungsgemäßen Verfahrens liegt die Hydroxylzahl des Polyetheralkohols aiv) 5 bis 12 mgKOH/g über oder unter der Hydroxylzahl des Polyetheralkohols bi). Bei dieser Ausführungsform liegt die Hydroxylzahl des Polyetheralkohols bi) vorzugsweise im Bereich zwischen 20 und 100 mgKOH/g.

Die Katalysatoren c) werden vorzugsweise in einer Menge von 0,02 bis 5 Gew.-% eingesetzt. Das Verhältnis der Katalysatoren ci) und cii) zueinander hängt von den angestrebten Eigenschaften der Schaumstoffe ab. Wie beschrieben, ist es erforderlich, dass mindestens je ein Katalysator ci) und cii) anwesend ist. Prinzipiell können auch mehrere Katalysatoren ci) und cii) eingesetzt werden.

Für das erfindungsgemäße Verfahren werden weiterhin auch Treibmittel sowie gegebenenfalls Hilfs- und/oder Zusatzstoffe eingesetzt werden.

Als Treibmittel für das erfindungsgemäße Verfahren wird zumeist Wasser, das mit Isocyanatgruppen unter Bildung von Kohlendioxid reagiert, eingesetzt. Die Wassermengen, die zweckmäßigerweise verwendet werden, betragen, abhängig von der angestrebten Dichte der Schaumstoffe, 0,1 bis 8 Gewichtsteile, vorzugsweise 1,5 bis 5 Gewichtsteile, bezogen auf 100 Gewichtsteile Komponente b).

Im Gemisch mit Wasser können gegebenenfalls auch sogenannte physikalisch wirkende Treibmittel eingesetzt werden. Dies sind Flüssigkeiten, welche gegenüber den Rezepturbestandteilen inert sind und Siedepunkte unter 100°C, vorzugsweise unter 50°C, insbesondere zwischen -50°C und 30°C bei Atmosphärendruck aufweisen, so dass sie unter dem Einfluss der exothermen Polyadditionsreaktion verdampfen. Beispiele derartiger, vorzugsweise verwendbarer Flüssigkeiten sind Kohlenwasserstoffe, wie Pentan, n- und iso-Butan und Propan, Ether, wie Dimethlyether und Diethylether, Ketone, wie Aceton und Methylethylkleton, Ethylacetat und vorzugsweise halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.

Als Treibmittel kann auch Kohlendioxid eingesetzt werden, das vorzugsweise als Gas in den Ausgangskomponenten gelöst wird.

Bevorzugt werden Wasser und/oder Kohlendioxid als Treibmittel verwendet.

Die neben Wasser erforderliche Menge an physikalisch wirkenden Treibmitteln kann in Abhängigkeit von der gewünschten Schaumstoffdichte auf einfache Weise ermittelt werden und beträgt ungefähr 0 bis 50 Gewichtsteile, vorzugsweise 0 bis 20 Gewichtsteile pro 100 Gewichtsteile Polyhydroxylverbindung.

Der Reaktionsmischung können auch noch Hilfsmittel und/oder Zusatzstoffe einverleibt werden. Genannt seien beispielsweise äußere und innere Trennmittel, Schaumstabilisatoren, Hydrolyseschutzmittel, Porenregler, fungistatisch und bakteriostatisch wirkende Substanzen, Farbstoffe, Pigmente, Füllstoffe, oberflächenaktive Stoffe und Flammschutzmittel.

Bei der technischen Herstellung von Polyurethan-Schaumstoffen ist es üblich, die Verbindungen mit mindestens zwei aktiven Wasserstoffatomen und die weiteren Einsatzstoffe sowie Hilfs- und/oder Zusatzstoffe vor der Umsetzung zu einer sogenannten Polyolkomponente zu vereinigen.

Weitere Angaben über die verwendeten Ausgangsstoffe finden sich beispielsweise im Kunststoffhandbuch, Band 7, Polyurethane, herausgegeben von Günter Oertel, Carl-Hanser-Verlag, München, 3. Auflage 1993.

Zur Herstellung der erfindungsgemäßen Polyurethane werden die organischen Polyisocyanate mit den Verbindungen mit mindestens zwei aktiven Wasserstoffatomen im Beisein der genannten Treibmittel, Katalysatoren und Hilfs- und/oder Zusatzstoffe, zumeist in Form einer Polyolkomponente, zur Reaktion gebracht.

Bei der Herstellung der erfindungsgemäßen Polyurethane werden Isocyanat- und Polyolkomponente in einer solchen Menge zur Reaktion gebracht, dass der Index vorzugsweise zwischen 50 und 200, bevorzugt zwischen 70 bis 150 und insbesondere zwischen 80 bis 120 liegt.

Die Herstellung der Polyurethan-Schaumstoffe erfolgt vorzugsweise nach dem oneshot-Verfahren, beispielsweise mit Hilfe der Hochdruck- oder Niederdrucktechnik. Die Schaumstoffe können in offenen oder geschlossenen metallischen Formwerkzeugen oder durch das kontinuierliche Auftragen des Reaktionsgemisches auf Bandstraßen zur Erzeugung von Schaumblöcken hergestellt werden.

Besonders vorteilhaft ist es, nach dem sogenannten Zweikomponentenverfahren zu arbeiten, bei dem, wie oben ausgeführt, eine Polyol- und eine Isocyanatkomponente hergestellt und verschäumt werden. Die Komponenten werden vorzugsweise bei einer Temperatur im Bereich zwischen 15 bis 120°C, vorzugsweise 20 bis 80°C vermischt und in das Formwerkzeug beziehungsweise auf die Bandstraße gebracht. Die Temperatur im Formwerkzeug liegt zumeist im Bereich zwischen 15 und 120°C, vorzugsweise zwischen 30 und 80°C.

Die nach dem erfindungsgemäßen Verfahren hergestellten Polyurethan-Weichschaumstoffe weisen, wie beschrieben, eine sehr niedrige Emission (VOC und FOG) bei den vom Markt geforderten mechanischen Eigenschaften und Alterungseigenschaften auf.

Ihr Einsatz erfolgt vorzugsweise in Kraftfahrzeuginnenräumen sowie zur Herstellung von Möbeln und Matratzen.

Die Erfindung soll an den nachfolgenden Beispielen näher erläutert werden.

### Beispiel 1 bis 4 und Vergleichsbeispiele 1 und 2

Die in Tabelle 1 und 2 aufgeführten Polyole, Katalysatoren und Zusatzstoffe wurden zu einer Polyolkomponente vermischt und mit den Isocyanatgruppen enthaltenden Prepolymeren bei dem angegebenen Isocyanatindex in einem Handversuch mit einem Vollradrührer vermischt, die Mischung in eine Form gegeben und dort ausschäumen gelassen.

Von den erhaltenen Schaumstoffen wurden die in Tabelle 1 und 2 aufgeführten Kennwerte bestimmt.

**Tabelle 1**

| Formulierung | | Vergleichsbeispiel | Beispiel | Beispiel | Beispiel |
|---|---|---|---|---|---|
| Polyol 1 | MT | 56,30 | 54,85 | 58,45 | 58,45 |
| Polyol 2 | MT | 31,00 | 26,00 | 26,00 | 26,00 |
| Polyol3 | MT | 7,50 | 7,50 | 7,50 | 7,50 |
| Polyol 4 | | | 5,50 | 2,00 | 2,00 |
| Wasser | MT | 2,30 | 3,10 | 3,10 | 3,10 |
| Stabilisator 1 | MT | 0,70 | 0,90 | 0,90 | 0,90 |
| Katalysator 1 | MT | 0,10 | | | |
| Katalysator 2 | MT | 0,65 | | | |
| Katalysator 3 | MT | 0,20 | | | |

| Katalysator 4 | MT | 0,10 | | | |
|---|---|---|---|---|---|
| Emulgator | | 1,00 | 1,00 | 1,00 | 1,00 |
| Farbpaste | | 0,15 | 0,15 | 0,15 | 0,15 |
| Katalysator 5 | | | 0,41 | 0,30 | 0,30 |
| Katalysator 6 | | | | 0,30 | 0,30 |
| Katalysator 7 | | | 0,2 | | |
| Katalysator 8 | | | 0,1 | | |
| Katalysator 11 | | | 0,30 | 0,30 | 0,30 |
| Iso 1 | | X | X | X | |
| Iso 2 | | | | | X |
| | Index | 80 | 80 | 80 | 78 |

| Verarbeitungsverhalten | | | | | |
|---|---|---|---|---|---|
| Rohdichte, Kern | Kg/m³ | 76 | 60 | 59 | 59 |
| Bruchdehnung | % | 145 | 150 | 155 | 146 |
| Zugfestigkeit | kPa | 125 | 135 | 135 | 134 |
| Druckverformungsrest | % | 3,2 | 11 | 10,5 | 8,1 |
| nach Alterung 5h,120°C 2Cyclen | % | 7,5 | 23,8 | 26,3 | 12,3 |
| Stauchhärte 40% | kPa | 5,8 | 4,7 | 4,4 | 5,4 |
| Verlustfaktor | | 0,41 | 0,39 | 0,38 | 0,37 |
| Speichermodul | N/cm² | 16,5 | 12,8 | 11,6 | 21,1 |

| Gasförmige und kondensierbare Emissionen | | | | | |
|---|---|---|---|---|---|
| VOC nach DC-PB VWL 709 | | | | | |
| insgesamt | ppm | 524 | 81 | 98 | |
| 1,4-Diacabicyclo (2.2.2)oktan | ppm | 83 | 36 | 27 | |
| Diphenylaminderivate | ppm | 5 | 0 | 0 | |
| Bis(dimethylamino ethyl)ether | | 71 | 0 | 0 | |
| Fogging nach DC-PB VWL 709 | | | | | |
| Insgesamt | ppm | 185 | 94 | 27 | |
| Diphenylaminderivate | ppm | 11 | 0 | 0 | |

**Tabelle 2**

| Formulierung | | Vergleichsbeispiel | Beispiel |
|---|---|---|---|
| Polyol 1 | MT | 56,30 | 62,2 |
| Polyol 2 | MT | 31,00 | 24,5 |
| Polyol 3 | MT | 7,50 | 7,50 |
| Polyol 4 | | | |
| Wasser | MT | 2,30 | 2,95 |
| Dabco^{®} DC 2525 | MT | 0,70 | 1,0 |
| Katalysator 1 | MT | 0,10 | |
| Katalysator 2 | MT | 0,65 | |
| Katalysator 3 | MT | 0,20 | |
| Katalysator 4 | MT | 0,10 | |
| Emulgator | | 1,00 | 1,00 |
| Farbpaste | | 0,15 | 0,15 |
| Katalysator 5 | | | 0,05 |
| Katalysator 7 | | | 0,65 |
| Katalysator 8 | | | 0,1 |
| Katalysator 9 | | | 0,5 |
| Katalysator 10 | | | 0,4 |
| | | | |
| Iso 1 | | X | X |
| Iso 2 | | | |
| | Index | 80 | 80 |

| Verarbeitungsverhalten | | | |
|---|---|---|---|
| Rohdichte, Kern | Kg/m³ | 76 | 75 |
| Bruchdehnung | % | 145 | 148 |
| Zugfestigkeit | kPa | 125 | 177 |
| Druckverformungsrest | % | 3,2 | 7,3 |
| nach Alterung 5h,120°C 2Cyclen | % | 7,5 | 22,4 |
| Stauchhärte 40% | kPa | 5,8 | 5,1 |
| Verlustfaktor | | 0,41 | 0,41 |
| Speichermodul | N/cm² | 16,5 | 20 |

| Gasförmige und kondensierbare Emissionen | | | |
|---|---|---|---|
| VOC nach DC-PB VWL 709 | | | |
| insgesamt | ppm | 524 | 65 |
| 1,4-Diacabicyclo (2.2.2)oktan | ppm | 83 | 0 |
| Diphenylaminderivate | ppm | 5 | 0 |
| Bis(dimethylaminoethyl )ether | | 71 | 0 |
| Fogging nach DC-PB VWL 709 | | | |
| Insgesamt | ppm | 185 | 88 |
| Diphenylaminderivate | ppm | 11 | |

### Erklärung

### MT - Masseteile

Polyol 1 - Polyetheralkohol aus Glycerin, einem PO-Block und einem Endblock aus Ethylenoxid, Hydroxylzahl 25-28 mgKOH/g
Polyol 2 -Polyetheralkohol aus Glycerin, einem Heteric-Block aus Propylenoxid und Ethylenoxid und einem Endblock aus Ethylenoxid, Hydroxylzahl 42 mgKOHlg,
Polyol 3 - Polyetheralkohol aus Propylenglykol und Propylenoxid, Hydroxylzahl 250 mgKOH/g
Polyol 4 - Polyetheralkohol ausEtylendiamin, einem Propylenoxidblock und einem Ethylenoxid-Endblock
Stabilisator 1 - Dabco® DC 2525, Firma Air Products
Katalysator 1 - Dabco BL 11®, Fa. Air Products
Katalysator 2 - Dabco 8154® , Fa. Air Products
Katalysator 3 - Niax A 107®, Fa. Osi,
Katalysator 4 - Lupranat N 201®, Fa. BASF
Katalysator 5 - Bisdimethylaminopropylharnstoff
Katalysator 6 - Bis(N,N-Dimethylaminoethoxyethyl)carbamat,
Katalysator 7 - Dimethyaminopropylharnstoff,
Katalysator 8 - N,N,N-Trimethyl-N-hydroxyethylbis(aminopropylether)
Katalysator 9 - Diethylethanolamin
Katalysator 10 - Bis(N,N-dimethyl-3-aminopropyl)Amin
Katalysator 11 - Dimethylaminopropylamin

Iso 1 - Umsetzungsprodukt aus einer Mischung aus 9,5 Gew.-Teilen 2,4'-MDI, 56,1 Gew.-Teilen 4,4'-MDI und 21,4 Gew-Teilen Polymer-MDI mit einem dreifunktionellen Polyetheralkohol auf Basis von Propylenoxid und Ethylenoxid, Hydroxylzahl 42 mgKOH/g, NCO-Gehalt 28 Gew.-%

Iso 2 - Umsetzungsprodukt aus einer Mischung aus 22 Gew.-Teilen 2,4'-MDI, 47,5 Gew.-Teilen 4,4'-MDI und 20,1 Gew.-Teilen Polymer-MDI mit einem dreifunktionellen Polyetheralkohol auf Basis von Propylenoxid und Ethylenoxid, Hydroxylzahl 35 mgKOH/g, NCO-Gehalt 29 Gew.-%

Die Kennwerte wurden nach den folgenden Meßmethoden bestimmt.

| | |
|---|---|
| Rohdichte in kg/m³ | DIN EN ISO 845 |
| VOC in ppm | PB VWL 709 |
| FOG in ppm | PB VWL 709 |
| Bruchdehung in % | DIN EN ISO 1798 |
| Zugfestigkeit in kPa | DIN EN ISO 1798 |
| Druckverformungsrest in % | DIN EN ISO 1856 |
| Druckverformungsrest nach | |
| Autoklav-Alterung in % | DIN EN ISO 1856 |
| Stauchhärte in kPa | DIN EN ISO 3386 |
| Verlustfaktor | DBL 5452 |
| Speichermodul in N/cm² | DBL 5452 |

## Patentansprüche

1. Verfahren zur Herstellung von viskoelastischen Polyurethanschäumen durch Umsetzung von
a) mindestens einem Polyisocyanat mit
b) mindestens einer Verbindung mit mindestens zwei mit Isocyanatgruppen reaktiven Wasserstoffatomen in Anwesenheit von
c) Katalysatoren und
d) Treibmitteln, **dadurch gekennzeichnet, dass**
als a) Polyisocyanate ai) Diphenylmethandiisocyanat oder aii) Mischungen aus Diphenylmethandiisocyanat und Polymethylenpolyphenylenpolyisocyanaten, und/oder aiii) Isocyanatgruppen enthaltende Prepolymere, herstellbar durch Umsetzung von aiv) Polyetheralkoholen mit Diphenylmethandiisocyanat oder Mischungen aus Diphenylmethandiisocyanat und Polymethylenpolyphenylenpoly-isocyanaten und als Katalysatoren c) eine Mischung aus mindestens je einem Katalysator ci) und cii), wobei ci) ausgewählt aus der Gruppe, enthaltend Verbindungen der allgemeinen Formeln (I) bis (VII), mit 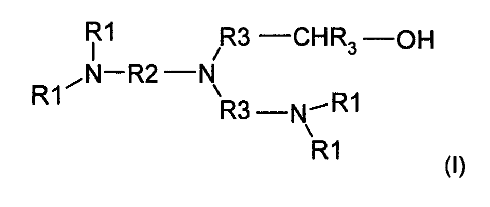 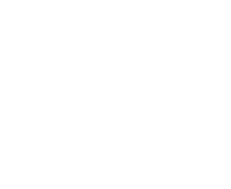 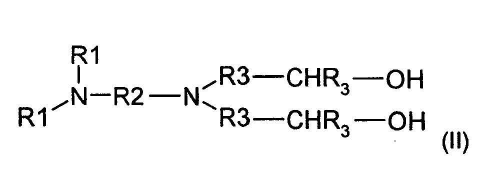 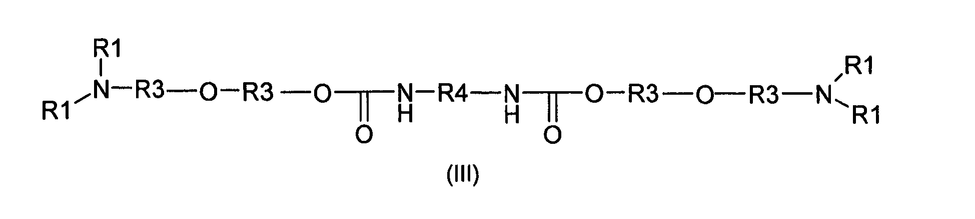 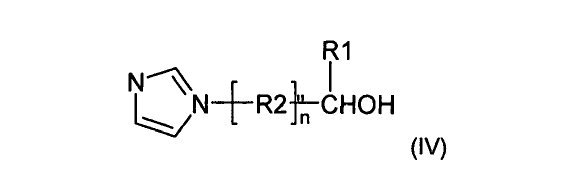 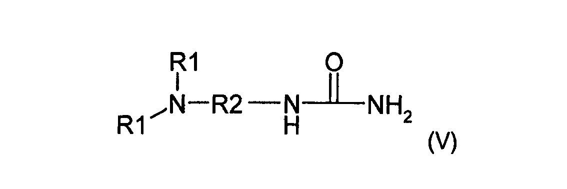 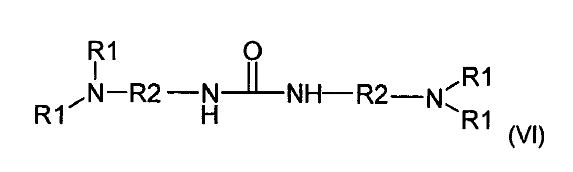 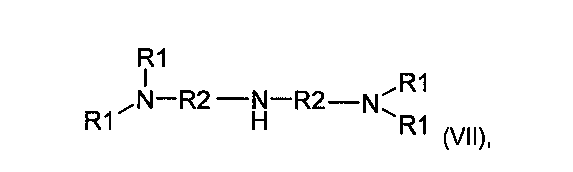 und cii) ausgewählt ist aus der Gruppe, enthaltend Verbindungen der allgemeinen Formeln (VIII) bis (XII), mit 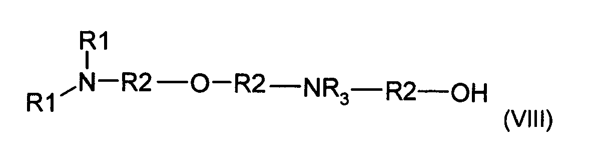 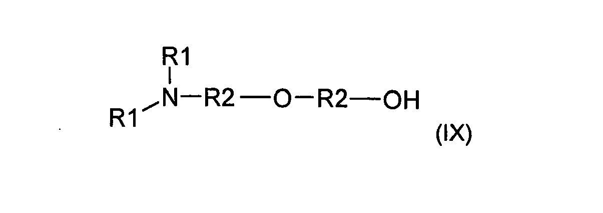 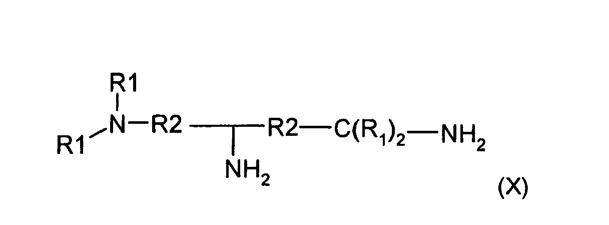 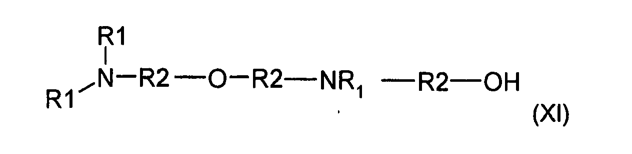 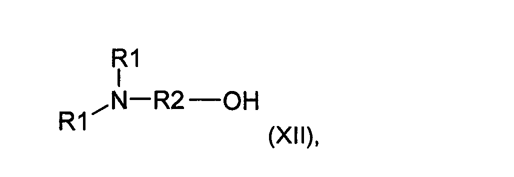 wobei R1, einen linearen, verzweigten oder cyclischen, gegebenenfalls mit einem Heteroatom substituierten Alkylrest mit 1 bis 5 Kohlenstoffatomen,
R2 einen aliphatischen, cycloaliphatischen oder aromatischen Rest mit 1 bis 10 Kohlenstoffatomen , und
R3, einen linearen, verzweigten oder cyclischen, gegebenenfalls mit einem Heteroatom substituierten Rest mit 1 bis 5 Kohlenstoffatomen bedeutet,
eingesetzt werden.

2. Verfahren nach Anspruch 1, **dadurch gekennzeichnet, dass** die Isocyanatgruppen enthaltenden Prepolymere aiii) einen NCO-Gehalt im Bereich von 23 bis 32 Gew.-% aufweisen.

3. Verfahren nach Anspruch 1, **dadurch gekennzeichnet, dass** die Katalysatoren c) in einer Menge von 0,02 - 5 Gew.-%, bezogen auf das Gewicht aller Einsatzkomponenten des Verfahrens, eingesetzt werden.

4. Verfahren nach Anspruch 1, **dadurch gekennzeichnet, dass** die Isocyanatgruppen enthaltenden Prepolymere aiii) einen Gehalt an 4,4'-Diphenylmethandiisocyanat von 35 - 70 Gew.-%, bezogen auf das Gewicht des Prepolymeren, aufweisen.

5. Verfahren nach Anspruch 1, **dadurch gekennzeichnet, dass** die Isocyanatgruppen enthaltenden Prepolymere aiii) einen Gehalt an 2,4'-Diphenylmethandiisocyanat von 10 bis 20 Gew.-%, bezogen auf das Gewicht des Prepolymeren, aufweisen.

6. Verfahren nach Anspruch 1, **dadurch gekennzeichnet, dass** die Isocyanatgruppen enthaltenden Prepolymere aiii) einen Gehalt an 2-Kern-Diphenylmethandiisocyanat von 40 bis 85 Gew.-% und einen Gehalt an 3-Kern bzw. höherkernigem Diphenylmethandiisocyanat von 5 bis 30 Gew.-%, jeweils bezogen auf das Gewicht des Prepolymeren, aufweisen.

7. Verfahren nach Anspruch 1, **dadurch gekennzeichnet, dass** die Komponente b) mindestens bii) ein Anlagerungsprodukt von Alkylenoxid an eine Verbindung mit mindestens einer Aminogruppe im Molekül enthält.

8. Verfahren nach Anspruch 1, **dadurch gekennzeichnet, dass** die Komponente bii) eine Hydroxylzahl im Bereich zwischen 160 und 500 mgKOH/g aufweist.

9. Verfahren nach Anspruch 1, **dadurch gekennzeichnet, dass** die Komponente bii) in einer Menge von 0,01-10 Gew.-% bezogen auf das Gewicht der Komponente b) eingesetzt wird.

10. Verfahren nach Anspruch 1, **dadurch gekennzeichnet, dass** die Komponente bii) mindestens ein Anlagerungsprodukt von Alkylenoxid an Dimethylaminopropylamin ist.

11. Verfahren nach Anspruch 1, **dadurch gekennzeichnet, dass** die Komponente bi) mindestens einen Polyetheralkohol bi) enthält, der durch Anlagerung von Alkylenoxid an einen zwei- und/oder dreifunktionellen Alkohol hergestellt wurde und eine Hydroxylzahl im Bereich zwischen 20 und 450 mgKOH/g aufweist.

12. Verfahren nach Anspruch 1, **dadurch gekennzeichnet, dass** die Polyetheralkohole aiv) und bi) in ihrer Polyetherkette einen Endblock aus dem gleichen Alkylenoxid aufweisen.

13. Verfahren nach Anspruch 1, **dadurch gekennzeichnet, dass** die Hydroxylzahl des Polyetheralkohols aiv) 5 bis 12 mgKOH/g über oder unter der Hydroxylzahl des Polyetheralkohols bi) liegt.

## Claims

1. A process for producing viscoelastic polyurethane foams by reacting
a) at least one polyisocyanate with
b) at least one compound having at least two hydrogen atoms which are reactive toward isocyanate groups in the presence of
c) catalysts and
d) blowing agents, wherein
ai) diphenylmethane diisocyanate or aii) mixtures of diphenylmethane diisocyanate and polymethylenepolyphenylene polyisocyanates and/or aiii) prepolymers comprising isocyanate groups which can be prepared by reacting aiv) polyether alcohols with diphenylmethane diisocyanate or mixtures of diphenylmethane diisocyanate and polymethylenepolyphenylene polyisocyanates are used as
a) polyisocyanates, and a mixture of at least one catalyst ci) and at least one catalyst cii), with ci) being selected from the group consisting of compounds of the general formulae (I) to (VII), 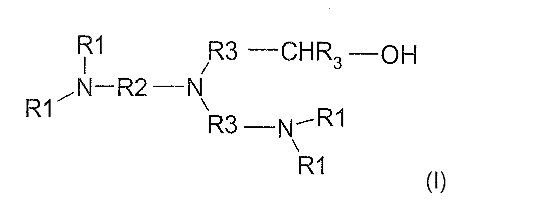 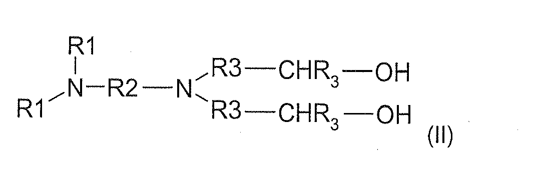 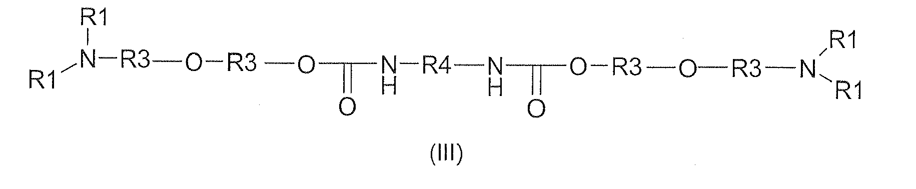 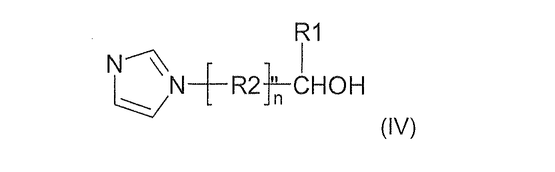 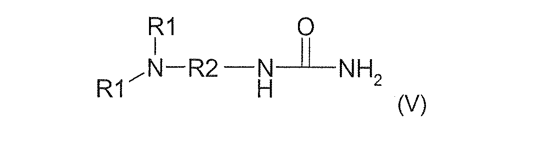 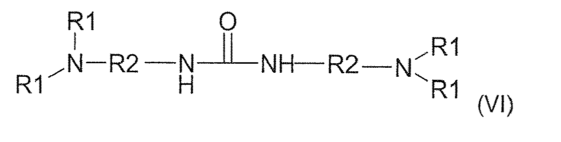 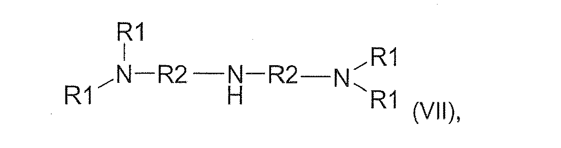 and cii) being selected from the group comprising compounds of the general formulae (VIII) to (XII), 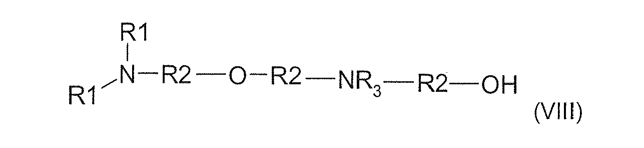 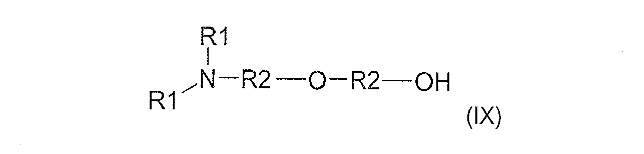 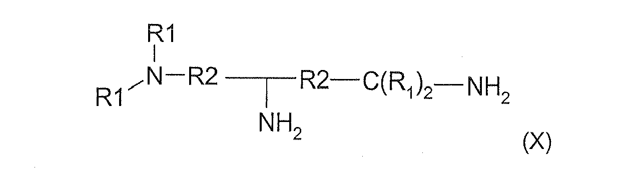 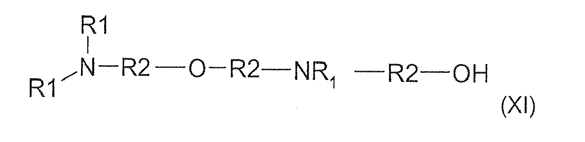 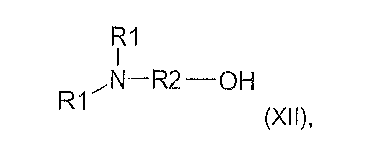
where R1 is a linear, branched or cyclic alkyl radical which has from 1 to 5 carbon atoms and may optionally be substituted by a heteroatom,
R2 is an aliphatic, cycloaliphatic or aromatic radical having from 1 to 10 carbon atoms, and
R3 is a linear, branched or cyclic radical which has from 1 to 5 carbon atoms and may optionally be substituted by a heteroatom,
are used as catalysts c).

2. The process according to claim 1, wherein the prepolymers aiii) comprising isocyanate groups have an NCO content in the range from 23 to 32% by weight.

3. The process according to claim 1, wherein the catalysts c) are used in an amount of 0.02-5% by weight, based on the weight of all starting components for the process.

4. The process according to claim 1, wherein the prepolymers aiii) comprising isocyanate groups have a content of diphenylmethane 4,4'-diisocyanate of 35-70% by weight, based on the weight of the prepolymer.

5. The process according to claim 1, wherein the prepolymers aiii) comprising isocyanate groups have a content of diphenylmethane 2,4'-diisocyanate of from 10 to 20% by weight, based on the weight of the prepolymer.

6. The process according to claim 1, wherein the prepolymers aiii) comprising isocyanate groups have a content of 2-ring diphenylmethane diisocyanate of from 40 to 85% by weight and a content of 3-ring or higher-ring diphenylmethane diisocyanate of from 5 to 30% by weight, in each case based on the weight of the prepolymer.

7. The process according to claim 1, wherein the component b) comprises at least bii) an addition product of alkylene oxide onto a compound having at least one amino group in the molecule.

8. The process according to claim 1, wherein the component bii) has a hydroxyl number in the range from 160 to 500 mg KOH/g.

9. The process according to claim 1, wherein the component bii) is used in an amount of 0.01-10% by weight, based on the weight of the component b).

10. The process according to claim 1, wherein the component bii) is at least one addition product of alkylene oxide onto dimethylaminopropylamine.

11. The process according to claim 1, wherein the component bi) comprises at least one polyether alcohol bi) which has been prepared by addition of alkylene oxide onto a bifunctional and/or trifunctional alcohol and has a hydroxyl number in the range from 20 to 450 mg KOH/g.

12. The process according to claim 1, wherein the polyether alcohols aiv) and bi) have an end block of the same alkylene oxide in their polyether chain.

13. The process according to claim 1, wherein the hydroxyl number of the polyether alcohol aiv) is from 5 to 12 mg KOH/g above or below the hydroxyl number of the polyether alcohol bi).

## Revendications

1. Procédé pour la production de mousses viscoélastiques de polyuréthanne, par mise en réaction
a) d'au moins un polyisocyanate avec
b) au moins un composé comportant au moins deux atomes d'hydrogène réactifs avec des groupes isocyanate, en présence
c) de catalyseurs et
d) d'agents d'expansion, **caractérisé en ce qu'**on utilise
en tant que polyisocyanates a), ai) du diphénylméthane-diisocyanate ou aii) des mélanges de diphénylméthane-diisocyanate et de polyméthylènepolyphénylène-polyisocyanates, et/ou aiii) des prépolymères contenant des groupes isocyanate, pouvant être préparés par mise en réaction aiv) de polyétheralcools avec du diphénylméthane-diisocyanate ou des mélanges de diphénylméthane-diisocyanate et de polyméthylènepolyphénylène-polyisocyanates, et en tant que catalyseurs c) un mélange d'au moins un de chacun des catalyseurs ci) et cii), ci) étant choisi dans le groupe contenant des composés de formules générales (I) à (VII), où 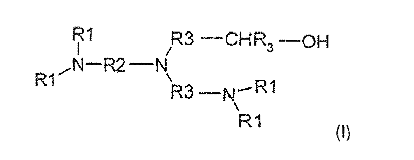 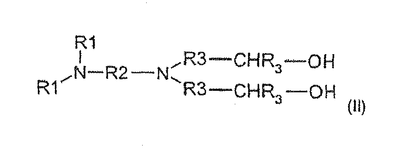 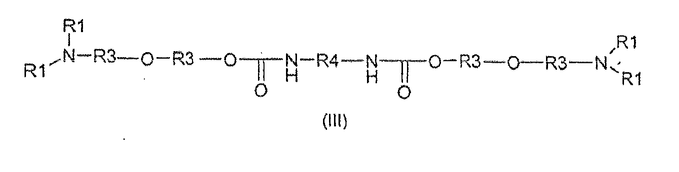 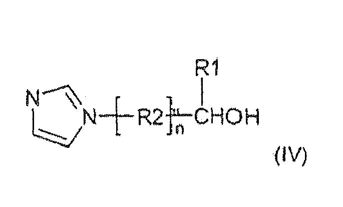 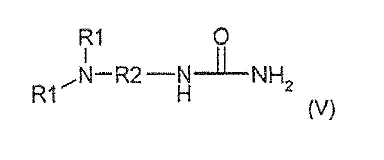 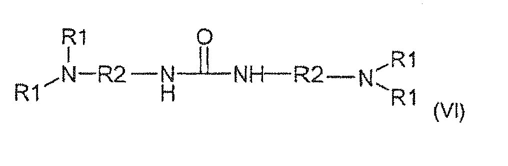 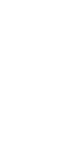 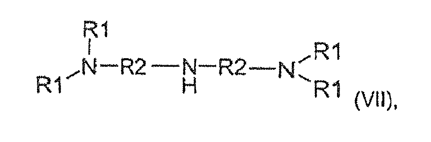 et cii) étant choisi dans le groupe contenant des composés de formules générales (VIII) à (XII), où 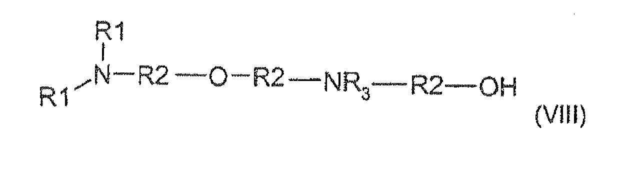 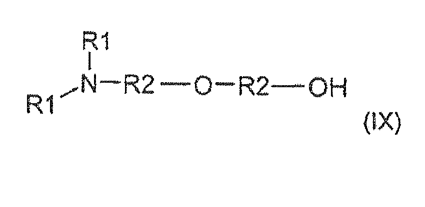 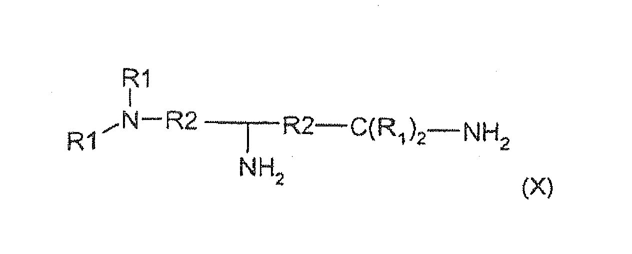 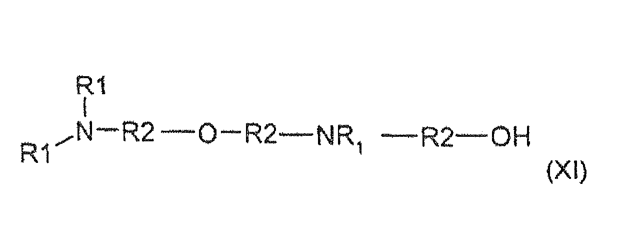 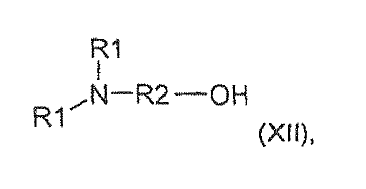 R1 représentant un radical alkyle linéaire, ramifié ou cyclique ayant de 1 à 5 atomes de carbone, éventuellement substitué par un hétéroatome,
R2 représentant un radical aliphatique, cycloaliphatique ou aromatique ayant de 1 à 10 atomes de carbone, et
R3 représentant un radical linéaire, ramifié ou cyclique ayant de 1 à 5 atomes de carbone, éventuellement substitué par un hétéroatome.

2. Procédé selon la revendication 1, **caractérisé en ce que** les prépolymères aiii) contenant des groupes isocyanate présentent une teneur en groupes NCO dans la plage de 23 à 32 % en poids.

3. Procédé selon la revendication 1, **caractérisé en ce que** les catalyseurs c) sont utilisés en une quantité de 0,02 à 5 % en poids, par rapport au poids de tous les composants utilisés du procédé.

4. Procédé selon la revendication 1, **caractérisé en ce que** les prépolymères aiii) contenant des groupes isocyanate présentent une teneur en 4,4'-diphénylméthane-diisocyanate de 35 à 70 % en poids, par rapport au poids du prépolymère.

5. Procédé selon la revendication 1, **caractérisé en ce que** les prépolymères aiii) contenant des groupes isocyanate présentent une teneur en 2,4'-diphénylméthane-diisocyanate de 10 à 20 % en poids, par rapport au poids du prépolymère.

6. Procédé selon la revendication 1, **caractérisé en ce que** les prépolymères aiii) contenant des groupes isocyanate présentent une teneur en diphénylméthane-diisocyanate binucléaire de 40 à 85 % en poids et une teneur en diphénylméthane-diisocyanate trinucléaire ou à plus grand nombre de noyaux de 5 à 30 % en poids, chaque fois par rapport au poids du prépolymère.

7. Procédé selon la revendication 1, **caractérisé en ce que** le composant b) contient au moins bii) un produit de fixation par addition d'oxyde d'alkylène sur un composé comportant au moins un groupe amino dans la molécule.

8. Procédé selon la revendication 1, **caractérisé en ce que** le composant bii) présente un indice de groupes hydroxy dans la plage comprise entre 160 et 500 mg de KOH/g.

9. Procédé selon la revendication 1, **caractérisé en ce que** le composant bii) est utilisé en une quantité de 0,01 à 10 % en poids, par rapport au poids du composant b).

10. Procédé selon la revendication 1, **caractérisé en ce que** le composant bii) est au moins un produit de fixation par addition d'oxyde d'alkylène sur la diméthylaminopropylamine.

11. Procédé selon la revendication 1, **caractérisé en ce que** le composant bi) contient au moins un polyétheralcool bi) qui a été préparé par fixation par addition d'oxyde d'alkylène sur un alcool bifonctionnel et/ou trifonctionnel et présente un indice de groupes hydroxy dans la plage comprise entre 20 et 450 mg de KOH/g.

12. Procédé selon la revendication 1, **caractérisé en ce que** les polyétheralcools aiv) et bi) comportent dans leur chaîne polyéther une séquence terminale à base du même oxyde d'alkylène.

13. Procédé selon la revendication 1, **caractérisé en ce que** l'indice de groupes hydroxy du polyétheralcool aiv) est supérieur ou inférieur de 5 à 12 mg de KOH/g à l'indice de groupes hydroxy du polyétheralcool bi).
